# EUROPÄISCHE PATENTSCHRIFT

(11) **EP 3 501 018 B1**
(45) Veröffentlichungstag und Bekanntmachung des Hinweises auf die Patenterteilung: **18.01.2023**
(21) Anmeldenummer: 17751746.3
(22) Anmeldetag: 11.08.2017
(51) Int. Cl.: G08B 13/196, G08B 13/19, H05B 47/125

(54) **PRÄSENZDETEKTOR UNBEWEGTER OBJEKTE**
PRESENCE DETECTOR FOR STILL OBJECTS
DÉTECTION DE PRÉSENCE D´OBJETS IMMOBILES

(30) Priorität: 19.08.2016 DE 102016115414
(43) Veröffentlichungstag der Anmeldung: 26.06.2019
(73) Patentinhaber: OSRAM GmbH, 80807 München (DE)
(72) Erfinder: KAESTLE, Herbert, 83278 Traunstein (DE); GALASSO, Fabiano, 85748 Garching (DE); WANG, Ling, 85386 Eching (DE); ESCHEY, Michael, 86517 Wehringen (DE); BRANDLMAIER, Meltem Demirkus, 80636 München (DE)
(74) Vertreter: Hofstetter, Schurack & Partner
(86) Internationale Anmeldenummer: PCT/EP2017/070466
(87) Internationale Veröffentlichungsnummer: WO 2018/033488

(56) Entgegenhaltungen:
- WO-A2-2012/030189
- DE-U1- 9 409 202
- US-A1- 2015 035 437
- US-A1- 2016 027 262
- US-A1- 2016 027 269

## Beschreibung

Die vorliegende Erfindung betrifft eine Präsenzdetektionsvorrichtung zum Detektieren einer Präsenz eines Objekts in ihrer Umgebung. Darüber hinaus betrifft die vorliegende Erfindung ein entsprechendes Verfahren zum Detektieren einer Präsenz eines Objekts in einem vorgegebenen Bereich.

Derzeitige Lichtmanagementsysteme basieren üblicherweise auf Bewegungsdetektoren die gewöhnlich auf sich bewegende Objekte reagieren. Die kostengünstigsten Sensoren für rasche Detektion und ereignisgesteuerte Lichtmanagementsysteme sind sogenannte" Passive Infrareds" (PIRs) . Derartige passive Infrarotdetektoren sind jedoch unzuverlässig, bedingt durch das falsche Auslösen eines Alarms durch loses Material, das im Wind flattert, sich bewegendes Laub oder sich bewegende Tiere.

Die Druckschrift US 2015/0035437 A1 beschreibt ein Lichtsystem mit einem Sensor, einer Kontrolleinheit und einem Kommunikationssystem. Mit Hilfe von Bewegungssensoren kann ein Objekt verfolgt werden und beleuchtet werden.

Die Druckschrift US 2016/00272769 A1 beschäftigt sich mit einer Bildüberwachung. Wird innerhalb eines Überwachungsbereichs eine relevante physikalische Aktivität erfasst, so erzeugt die Kamera eines oder mehrere Bilder von dem Überwachungsbereich. Die erfassten Bilder werden hinsichtlich der physikalischen Aktivität analysiert. Die Aktivität wird mit Hilfe von Bewegungssensoren festgestellt.

Die Druckschrift US 2016/00272762 A1 betrifft ein Lichtsystem für den Hausbereich. Dieses Lichtsystem beinhaltet eine Leuchte, die an eine elektrische Versorgung angeschlossen ist, eine Kamera, eine Kontrolleinheit sowie eine Auslöseeinheit. Die Kontrolleinheit übermittelt ein Signal über ein Netzwerk als Reaktion auf ein empfangenes Signal, welches von der Auslöseeinheit übermittelt wird.

Ein zusätzliches Problem bei bewegungsbasierten Sensoren besteht darin, dass sie in der Regel Personen nicht detektieren, die sich stationär oder mit geringer Aktivität in einem bestimmten Bereich aufhalten. Eine solche Situation tritt, beispielsweise beim Fernsehen, beim Sitzen vor dem Computer oder beim Lesen eines Buchs etc. auf. Werden in solchen Situationen Bewegungsdetektoren eingesetzt, um das Licht im Raum automatisch anzuschalten, so sind diese Personen oftmals gezwungen, beispielsweise mit den Armen zu winken, damit das Licht nach einer voreingestellten Zeitabschaltung wieder angeschaltet wird.

Traditionelle Bewegungssensoren handhaben den Mangel an der Fähigkeit einer Präsenzdetektion bei geringer Aktivität, indem eine Zeitabschaltung nach der letzten Bewegungsdetektion aktiviert wird. Die Zeitabschaltung kann aber kaum in jeder Situation richtig eingestellt werden, da ein Raum beispielsweise manchmal nur für wenige Minuten betreten wird und ein anderes Mal für mehrere Stunden. Wenn also die Zeitabschaltung zu kurz eingestellt ist, sind die Personen meist dazu gezwungen, mit den Armen zu winken, damit das Licht wieder angeht, während im anderen Fall das Licht unnötig lange eingeschaltet bleibt.

Auf dem Markt sind unterschiedliche Typen von Bewegungsdetektoren verfügbar. Diese basieren auf verschiedenen Detektortechnologien. Wie bereits erwähnt arbeiten viele Detektoren auf Infrarot-Basis (PIR-Detektoren). Sie detektieren Änderungen der Infrarotenergie, die beispielsweise auf ausgestrahlte Körperwärme zurückzuführen ist.

Andere Detektoren, die Bewegungen detektieren können, arbeiten auf Mikrowellenbasis. Sie detektieren beispielsweise die Mikrowellen-Doppler-Verschiebung in einem reflektierten Signal eines sich bewegenden Objekts.

Darüber hinaus sind auch Ultraschallsensoren zur Detektion von Bewegungen gängig. Diese Ultraschalldetektoren detektieren Ultraschall-Doppler-Verschiebungen im reflektierten Signal von einem sich bewegenden Objekt. Wie auch die Mikrowellendetektoren sind die Ultraschalldetektoren aktive Sensoren, denn sie senden eigene Testsignale zur Detektion eines sich bewegenden Objekts im Raum aus. Demgegenüber begnügen sich die passiven Infrarotsensoren mit dem Empfang von Infrarotstrahlung die vom sich bewegenden Objekt selber erzeugt und abgestrahlt wird.

Bewegungsdetektoren werden eingesetzt, um beispielsweise Schaltungen auszulösen. Eine derartige Schaltung kann im Bereich einer Gebäudebeleuchtung vorgesehen sein. Eine durch einen Bewegungsdetektor aktivierte Schaltung kann aber auch beispielsweise für Kameras genutzt werden. So kann eine Aufnahme einer Kamera starten, wenn dies durch eine detektierte Bewegung ausgelöst wird. Eine derartige Kamera mit Bewegungsmelder ist von der Firma ACTi bekannt. Beispielsweise stellt diese Firma die Modelle ACM-4201, ACM-4001, TCM-4201 und TCM-4001 her, die eine solche Bauart besitzen. Insbesondere ist dabei in eine quaderförmige Kamera ein passiver Infrarotsensor (PIR) zum Auslösen der Kamera eingebaut. Der eingebaute passive Infrarotsensor detektiert die Bewegung einer Person durch Erfassen von Temperaturänderungen in einer Szene. Die Sensorkamera arbeitet auch bei totaler Finsternis, bzw. löst auch dann aus. Die Wärme eines menschlichen Körpers, der durch die Szene wandert, triggert den PIR-Sensor. Ein Alarmsignal wird beispielsweise über ein Datennetz sofort an eine Steuerzentrale geschickt. Da der digitale Ausgang der Kamera an externe Lampen oder Alarmsirenen angeschlossen werden kann, werden diese Geräte unmittelbar nach der detektierten Bewegung aktiviert. So kann beispielsweise ein Einbrecher, der bei vollkommener Finsternis einen bewachten Bereich betritt, durch eine qualitativ hochwertige Videoaufnahme erfasst werden, wenn beispielsweise gleichzeitig mit der Kamera eine entsprechende Beleuchtung angeschaltet wird. Diese Kamera, die durch einen Bewegungsmelder ausgelöst wird, ist jedoch nicht in der Lage, ein Objekt, insbesondere eine Person, auch dann zu detektieren, wenn es sich nicht bewegt, denn die Aufnahme stoppt beispielsweise nach 2 Sekunden, bzw. wiederum nach einer vorgegebene Abschaltzeit, und wird erst wieder reaktiviert, wenn eine erneute Bewegung detektiert wird.

Die Aufgabe der vorliegenden Erfindung besteht somit darin, die Präsenz eines auslösenden Objekts, weiterhin festzustellen, auch wenn das Objekt weiterhin stationär bzw. unbeweglich im Beobachtungsbereich verbleibt.

Erfindungsgemäß wird diese Aufgabe gelöst durch eine Präsenzdetektionsvorrichtung nach Anspruch 1 sowie ein Verfahren nach Anspruch 15. Vorteilhafte Weiterbildungen der Erfindung ergeben sich aus den Unteransprüchen.

Es wird demnach eine Präsenzdetektionsvorrichtung zum Detektieren einer Präsenz eines Objekts in ihrer Umgebung bereitgestellt. Demnach kann ein vorgegebenes Objekt von der Präsenzdetektionsvorrichtung in ihrer Umgebung erfasst und identifiziert werden. Dazu besitzt die Präsenzdetektionsvorrichtung eine Bewegungsdetektionseinheit zum Detektieren einer Bewegung des Objekts in der Umgebung der Präsenzdetektionsvorrichtung und zum Ausgeben eines Bewegungssignals in Abhängigkeit von dem Detektieren. Mithilfe der Bewegungsdetektionseinheit kann also zunächst detektiert werden, ob sich ein Objekt in der Umgebung der Präsenzdetektionsvorrichtung bewegt, und wenn dem so ist, so wird ein entsprechendes Bewegungssignal ausgegeben. Das Bewegungssignal kann beispielsweise darin bestehen, dass sich ein Signalpegel oder eine Signalform ändert.

Darüber hinaus besitzt die Präsenzdetektionsvorrichtung eine Steuerungseinheit zum Erzeugen eines Aktivierungssignals in Abhängigkeit von dem Bewegungssignal. Es wird also mithilfe der Steuerungseinheit das Bewegungssignal in ein Aktivierungssignal umgesetzt, um damit ein andere Einheiten aktivieren zu können. In einer Ausgestaltung handelt es sich bei dieser Steuerungseinheit um einen Treiber, der ein entsprechendes Treibersignal aus dem Bewegungssignal erzeugt. Gegebenenfalls ist die Steuerungseinheit auch in die zu aktivierende Einheit (z.B. Kamera) integriert und stellt nur eine entsprechende Schnittstelle dar.

Insbesondere beinhaltet die Präsenzdetektionsvorrichtung eine Kamera, die mit dem Aktivierungssignal aktivierbar ist, zum Gewinnen eines Videosignals von der Umgebung der Präsenzdetektionsvorrichtung. Eine derartige Kamera ist in der Lage, in gewissen zeitlichen Abständen ein Bild der Umgebung der Präsenzdetektionsvorrichtung bzw. des Bereichs um die Präsenzdetektionsvorrichtung aufzunehmen. Dabei kann es sich um eine Videosequenz, aber auch um einzelne Aufnahmen beispielsweise im Sekundentakt handeln. Die Kamera startet mit ihren Aufnahmen, sobald sie durch das Aktivierungssignal aktiviert worden ist.

Des Weiteren umfasst die Präsenzdetektionsvorrichtung eine Auswerteeinheit zum Erzeugen eines Präsenzsignals betreffend die Präsenz des Objekts in einer Phase der Bewegungslosigkeit des Objekts durch Auswerten des Videosignals . Dies bedeutet, dass die Auswerteeinheit das Videosignal dahingehend auswertet, ob sich ein Objekt in der Umgebung der Präsenzdetektionsvorrichtung befindet, das gegenüber einem Vorgabezustand nicht präsent war. Alles in allem wird also die Detektion einer Bewegung dazu verwendet, das Detektieren einer Präsenz zu initiieren. Damit wird die Präsenz eines Objekts dann festgestellt, wenn sich das Objekt nur anfangs bewegt und anschließend bewegungslos verweilt. Insbesondere wird damit in dieser Phase der Bewegungslosigkeit bzw. der statischen Anwesenheit die Präsenz eindeutig detektiert. Erfindungsgemäß bleibt die Präsenzdetektionsvorrichtung so lange aktiviert, wie die Präsenz des Objekts durch sie detektiert wird. Die Präsenzdetektionsvorrichtung ist in Anspruch 1 definiert.

Dabei wird die Kamera von der Steuerungseinheit mit dem Präsenzsignal derart gesteuert, dass die Kamera aktivgehalten wird, mindestens solange die Präsenz des Objekts durch die Auswerteeinheit festgestellt ist. Somit bleibt beispielsweise die Überwachungskamera jedenfalls solange eingeschaltet, wie beispielsweise eine Person in einem Raum, der von der Kamera überwacht wird, präsent ist. Die Person kann damit durchgehend überwacht werden.

In einer speziellen Ausgestaltung kann die Auswerteeinheit dazu ausgebildet sein, bei dem Auswerten des Videosignals eine Subtraktion zwischen einem Bild des Videosignals und einem vorgegebenen Bild der Umgebung der Präsenzdetektionsvorrichtung ohne das Objekt durchzuführen. Dies bedeutet, dass zunächst ein Bild der Umgebung aufgenommen wird, wobei die dabei erfassten Objekte hinsichtlich ihrer Präsenz (Hintergrund) nicht überwacht werden sollen. Gerät nun ein weiteres Objekt durch Bewegung in den Erfassungsbereich der Präsenzdetektionsvorrichtung, so wird die Kamera aktiviert, und die Auswerteeinheit erfasst durch die Subtraktion die Präsenz des neuen Objekts. Vorzugweise bleibt die Kamera so lange eingeschaltet und die Präsenzdetektionsvorrichtung so lange aktiviert, wie sich das Objekt in dem Erfassungsbereich der Präsenzdetektionsvorrichtung befindet.

Gemäß einer alternativen Ausgestaltung ist die Auswerteeinrichtung dazu ausgebildet, bei dem Auswerten des Videosignals eine Ähnlichkeitsanalyse zwischen einem Bild des Videosignals und einem vorgegebenen Musterbild bzw. Referenzbild des Objekts durchzuführen. Eine derartige Ähnlichkeitsanalyse hat beispielsweise dann gegenüber der einfachen Subtraktion von Bildern einen Vorteil, wenn sich beispielsweise in einem zu überwachenden Raum die Lichtverhältnisse ändern. Die einfache Subtraktion würde dann bereits ein Differenzsignal liefern, während die Ähnlichkeitsanalyse durchaus in der Lage sein kann, unterschiedlich beleuchtete Objekte einander zuzuordnen, sodass dadurch nicht die vermeintliche Präsenz eines neuen Objekts fälschlich festgestellt wird.

Die Präsenzdetektion der Ähnlichkeitsanalyse zu einem Referenzbild hat auch den Vorteil, dass automatisch eine Objektklassifizierung stattfindet, wodurch sich die Präsenzanalyse nur auf ein Objekt eines bestimmten Typs z.B. eine Person bezieht. Ein hereingeschobener Stuhl würde von der Präsenzdetektion unbeachtet bleiben.

In einer bevorzugten Ausführungsform ist die Auswerteeinheit dazu ausgebildet, eine oder mehrere Eigenschaften eines Objekts oder eines Objekttyps aus vorgegebenen Trainingsbilddaten vorab zu lernen (Trainingsbilder, Trainingsphase), um damit anschließend die Präsenz des Objekts anhand der aus dem Videosignal extrahierten Eigenschaft bzw. Eigenschaften zu erkennen und das Präsenzsignal entsprechend auszubilden. Auf diese Weise ist es möglich, die Präsenzdetektionsvorrichtung dahingehend zu trainieren, ein vorgegebenes Objekt in dem Videosignal zu erkennen. Dies hat den Vorteil, dass die Präsenzdetektionsvorrichtung auf beliebige Objekte bzw. Objekttypen mit hoher Zuverlässigkeit trainiert werden kann.

Insbesondere kann auch Fuzzy-Technologie eingesetzt werden, um auch ähnliche Objekte zu erkennen, die nicht absolut gleich beziehungsweise identisch mit den erlernten Objekteigenschaften sind. Dies hat beispielsweise Vorteile bei der Präsenzdetektion von Personen in allen ihren unterschiedlichen Erscheinungsformen.

Entsprechend einer weiteren Ausgestaltung kann die Bewegungsdetektionseinheit einen Infrarotsensor aufweisen, mit dem auf der Basis von Infrarotstrahlung eine Bewegung des Objekts detektierbar ist. Derartige Infrarotsensoren sind sehr zuverlässig bei der Detektion von Bewegungen. Alternativ können aber auch Mikrowellensensoren, Ultraschallsensoren, Schallsensoren usw. für die Bewegungsdetektionseinheit eingesetzt werden.

Bei dem Objekt, dessen Präsenz detektiert werden soll, kann es sich um eine Person oder ein Tier oder um ein nichtlebendes Objekt handeln. So kann beispielsweise die Präsenz einer Person in einem Raum überwacht werden. Dazu ist es günstig, wenn die Auswerteeinheit auf die Detektion von Personen trainiert ist.

Weiter alternativ kann es sich bei dem Objekt auch um einen Gegenstand handeln, dessen Präsenz zu überwachen ist. Dies kann beispielsweise bei Fertigungsanlagen auf Fließbändern und dergleichen erforderlich sein. Mit der Präsenzdetektion kann der Gegenstand auch dann detektiert werden, wenn er sich nicht beziehungsweise nicht mehr bewegt.

Die Präsenzdetektionsvorrichtung kann ferner eine Beleuchtungseinheit aufweisen, welche mit dem Aktivierungssignal aktivierbar ist. In einer Ausgestaltung kann der eigentliche Präsenzdetektor einschließlich Bewegungsdetektionseinheit, Steuerungseinheit, Kamera und Auswerteeinheit zusammen mit der Beleuchtungseinheit in einem gemeinsamen Gehäuse untergebracht sein. Entsprechend einer anderen Ausgestaltung kann die Beleuchtungseinheit aber auch außerhalb des Gehäuses des eigentlichen Präsenzdetektors angeordnet sein. Dies wäre beispielsweise in einem Raum der Fall, der eine eigene Beleuchtung aufweist, welche lediglich von dem eigentlichen Präsenzdetektor angesteuert wird.

Des Weiteren kann vorgesehen sein, dass die Beleuchtungseinheit solange angeschaltet bleibt, solange sich das Objekt entsprechend dem Präsenzsignal in der Umgebung befindet. Wenn also beispielsweise eine Person in einem Raum anwesend ist, wird die Beleuchtungseinheit solange nicht abgeschaltet, bis die Person den Raum verlässt. Damit kann sichergestellt werden, dass der Raum durchgehend beleuchtet ist, solange sich eine Person in dem überwachten Raum bzw. in der überwachten Umgebung aufhält.

Die Kamera der Präsenzdetektionsvorrichtung kann einen Videosensor aufweisen, welcher auf CMOS-Technologie basiert. Derartige Videosensoren erlauben auf günstige Weise hochqualitative Videosequenzen zu erstellen. Alternativ können aber auch andere Kameratechnologien eingesetzt werden.

Die Steuerungseinheit der Präsenzdetektionsvorrichtung kann dazu ausgebildet sein, die Präsenzdetektionsvorrichtung so lange aktiviert zu halten, bis das Objekt nicht mehr in der Umgebung präsent ist. Dies bedeutet, dass die Präsenzdetektionsvorrichtung zwar durch die Bewegungsdetektionseinheit aktiviert, aber durch die kamerabasierte Auswerteeinheit deaktiviert wird. Das Deaktivieren der Präsenzdetektionsvorrichtung bei Abwesenheit des Objekts hat den Vorteil der Energieeinsparung für die Zeit, in der das Objekt nicht mehr in der Umgebung der Präsenzdetektionsvorrichtung anwesend ist.

In einer Weiterbildung handelt es sich bei dem Objekt um eine oder mehrere Personen, welche von der Bewegungsdetektionseinheit in einem Bereich der Umgebung detektiert werden, wobei die Beleuchtungseinheit mittels der Steuerungseinheit zum Erzeugen einer Beleuchtungsszene in Abhängigkeit von dem Bereich steuerbar ist, insbesondere so, dass in der Umgebung nur der Bereich beleuchtet wird. Befindet sich also beispielsweise eine Gruppe von Personen in einem größeren Raum, der flächendeckend beleuchtet werden kann, so kann vorgesehen sein, dass nur derjenige Bereich beleuchtet wird, indem sich die Personengruppe befindet. Übrige Bereiche des Raums werden dann nicht beleuchtet, sodass dadurch Energie eingespart werden kann. Die Beleuchtungsszene kann aber auch derart gestaltet sein, dass neben dem Bereich, in dem sich die Personengruppe befindet, auch beispielsweise der Bereich des Ausgangs oder beispielsweise ein Bereich eines Tisches, auf dem sich Getränke befinden, stets beleuchtet bleiben, solange die Personengruppe in dem Raum anwesend ist. Gegebenenfalls bleiben auch Verbindungsabschnitte zwischen den genannten Bereichen mitbeleuchtet.

In einer weiteren vorteilhaften Ausgestaltung ist vorgesehen, dass das Objekt eine Person ist, welche in der Umgebung der Bewegungsdetektionseinheit detektiert wird, mit der Bewegungsdetektionseinheit ein Bewegungspfad der Person in der Umgebung vorhersagbar ist, und die Steuerungseinheit ausgebildet ist, die Beleuchtungseinheit in Abhängigkeit von dem Bewegungspfad anzusteuern, insbesondere derart, dass nur oder wenigstens der vorhergesagte Bewegungspfad oder ein Teil davon beleuchtet wird. Demnach wertet die Bewegungsdetektionseinheit beispielsweise zeitlich hintereinander mehrere Bilder aus, um daraus einen Bewegungspfad der Person zu schätzen. Wenn sich beispielsweise auf einem Parkplatz zwei Wege gabeln, wird nur derjenige beleuchtet, auf den sich die Person zubewegt. Somit kann zum einen Energie eingespart werden und zum anderen kann ein Weg beleuchtet werden, der von der Person noch nicht beschritten ist, was durch einfache Bewegungsmelder nicht möglich ist. Dies gibt der Person zusätzliche Sicherheit, da vorausschauend beleuchtet wird.

Eine weitere Ausgestaltung sieht vor, dass mit der Steuerungseinheit die Bewegungsdetektionseinheit abschaltbar ist, sobald entsprechend dem Präsenzsignal ein Objekt in der Umgebung detektiert ist. Sobald also die Präsenz des Objekts, z. B. der Person in der Umgebung festgestellt ist, ist es nicht mehr notwendig, die Bewegungsdetektionseinheit aktiv zu halten, denn die Kamera ist ja bereits aktiv und sorgt für die Überwachung. Somit kann beispielsweise der PIR-Sensor oder jeder andere installierte Bewegungsdetektor abgeschaltet werden, um Energie einzusparen.

Bei einem weiteren Ausführungsbeispiel ist die Beleuchtungseinheit von der Steuerungseinheit nach einer vorbestimmten Zeitdauer abhängig von demjenigen Zeitpunkt abschaltbar, zu dem das Objekt entsprechend dem Präsenzsignal die Umgebung verlässt. Wenn also beispielsweise die Person nicht mehr detektiert wird und das Präsenzsignal deren klare Abwesenheit signalisiert, kann eine gewisse Abschaltzeit (typischerweise 10 s bis 1 min) verwendet werden, um das Licht abzuschalten und den Bewegungsdetektor für die anschließende Dunkelperiode zu reinitialisieren. Gegebenenfalls sind die Aktivierungen von Kamera und Beleuchtungseinheit auch miteinander gekoppelt.

Die oben genannte Aufgabe wird erfindungsgemäß auch gelöst durch ein Verfahren zum Detektieren einer Präsenz eines Objekts in einem vorgegebenen Bereich, durch Detektieren einer Bewegung des Objekts in dem vorgegebenen Bereich, Erzeugen eines Bewegungssignals in Abhängigkeit von dem Detektieren, Erzeugen eines Aktivierungssignals in Abhängigkeit von dem Bewegungssignal, Gewinnen eines Videosignals von dem vorgegebenen Bereich ausgelöst durch das Aktivierungssignal und Erzeugen eines Präsenzsignals betreffend die Präsenz des Objekts in einer Phase der Bewegungslosigkeit des Objekts in dem vorgegebenen Bereich durch Auswerten des Videosignals dahingehend, ob sich das Objekt in der Umgebung der Präsenzdetektionsvorrichtung befindet, wobei mit dem Präsenzsignal die Kamera (4) derart gesteuert wird, dass die Kamera (4) aktiv gehalten wird, mindestens solange die Präsenz des Objekts durch die Auswerteeinheit (5) festgestellt ist.

Die oben im Zusammenhang mit der Präsenzdetektionsvorrichtung genannten Weiterbildungen und Vorteile lassen sich auch auf das erfindungsgemäße Verfahren übertragen. Dementsprechend sind die dort geschilderten funktionellen Merkmale auch als Verfahrensmerkmale zu sehen.

Die vorliegende Erfindung wird nun anhand der beigefügten Zeichnungen näher erläutert, in denen zeigen:
Figur 1 ein Blockschaltdiagramm einer erfindungsgemäßen Präsenzdetektionsvorrichtung und
Figur 2 eine schematische Ansicht zur Verdeutlichung des erfindungsgemäßen Verfahrens.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Merkmalskombinationen, sondern auch in Alleinstellung oder in anderen technisch sinnvollen Merkmalskombinationen realisiert werden können.

Die vorliegende Erfindung basiert auf der Erkenntnis, dass herkömmliche Bewegungsdetektoren anfällig für Fehlalarm bei losen und flatternden Materialien oder sich bewegenden kleinen Tieren sind, wenn ihre Sensitivität erhöht wird, um geringfügige Aktivitäten einer Person zu detektieren. Daher ist es im Bereich der Installationstechnik (z.B. "Smart Home" oder "Smart Office") günstiger, einen Belegungs- beziehungsweise Präsenzdetektor auf der Basis einer Bildverarbeitung zu nutzen, um insbesondere die stationäre Präsenz in einem Raum zu detektieren. Dabei besteht jedoch die Problematik, dass Videosensoren mit Standardkameras für den sichtbaren Bereich nicht in dunklen Räumen einsatzfähig sind. Vielmehr muss ein passendes Lichteinschaltkonzept vorliegen, um mit einer Standardkamera arbeiten zu können.

Die Grundidee der vorliegenden Erfindung basiert somit darauf die Präsenzdetektion durch eine Bewegungsdetektion zu aktivieren, und die Präsenzdetektion auf Bildverarbeitung zu stützen. Gegebenenfalls kann für oder bei der Aktivierung der Präsenzdetektion auch eine Beleuchtung aktiviert werden, um die Präsenzdetektion zu verbessern beziehungsweise zu ermöglichen.

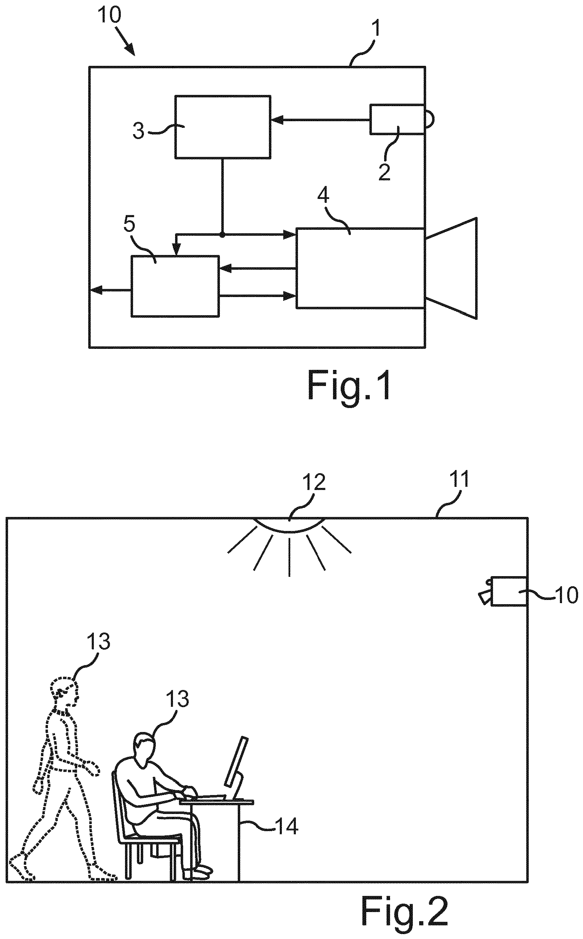

In dem Beispiel von Figur 1 ist schematisch eine Präsenzdetektionsvorrichtung gemäß einer Ausführungsform dargestellt. Sie besitzt in diesem Beispiel ein Gehäuse 1 in das eine Bewegungsdetektionseinheit 2 integriert ist. Bei dieser Bewegungsdetektionseinheit kann es sich beispielsweise um einen (passiven) Infrarotsensor handeln. Alternativ können aber auch andere Bewegungssensoren hierfür eingesetzt werden.

Die Bewegungsdetektionseinheit 2 liefert ein Bewegungssignal zu einer Steuerungseinheit 3. Diese Steuerungseinheit 3 erzeugt aus dem Bewegungssignal ein Aktivierungssignal. Gegebenenfalls erfolgt hierdurch lediglich eine Spannungspegelanpassung oder Impedanzanpassung. Die Steuerungseinheit 3 kann in die Bewegungsdetektionseinheit 2 als Ausgangstreiber integriert sein. Alternativ kann die Steuerungseinheit 3 aber auch in eine nachgeschaltete Kamera 4 quasi als Eingangsschnittstelle integriert sein.

Das Aktivierungssignal der Steuerungseinheit 3 wird der Kamera 4 zugeführt. Mit dem Aktivierungssignal lässt sich die Kamera 4 aktivieren. Es erfolgt beispielsweise eine Aktivierung der Kamera 4, wenn die Bewegungsdetektionseinheit 2 ein sich bewegendes Objekt in der Umgebung der Präsenzdetektionsvorrichtung, d.h. im Erfassungsbereich der Bewegungsdetektionseinheit, registriert hat.

Bei der Kamera 4 kann es sich um eine Standardkamera im sichtbaren Bereich des Lichts handeln. Die Kamera kann aber auch eine Infrarotkamera oder dergleichen sein. Darüber hinaus kann die Kamera 4 eindimensionale oder zweidimensionale "Bilder" bzw. Videosequenzen erstellen.

Die Kamera 4 liefert ein Videosignal an eine Auswerteeinheit 5. In der Auswerteeinheit 5 findet eine Bildverarbeitung statt, mit der es möglich ist, ein Objekt in dem Videosignal zu erkennen bzw. zu identifizieren. Entweder soll ein Objekt, d.h. irgendein Objekt, nur unspezifisch erfasst werden, oder aber es soll spezifisch erfasst, d.h. als Objekttyp identifiziert werden. Zu letzterem gehört beispielsweise das Erfassen einer Person, die von anderen Objekten, die keine Personen sind, zu unterscheiden ist.

Im Hinblick auf das unspezifische Detektieren eines Objekts kann in der Bildverarbeitung beispielsweise eine einfache Subtraktion erfolgen. Es wird dazu in der Auswerteeinheit 5 ein aktuelles Bild der Kamera 4 von einem zuvor aufgenommenen Bild der Umgebung subtrahiert. Ergibt sich bei der Subtraktion eine Differenz, so hat sich die Umgebung verändert. Unter gewissen zusätzlichen äußeren Bedingungen kann also davon ausgegangen werden, dass zusätzlich ein Objekt in die Umgebung gekommen ist.

Eine verbesserte Bildverarbeitung kann auf einer Ähnlichkeitsanalyse basieren. Falls nämlich beispielsweise ein aktuelles Bild des Videosignals der Kamera 4 ähnlich einem vorab aufgenommenen Bild der Umgebung ist, kann davon ausgegangen werden, dass kein zusätzliches Objekt in die Umgebung gekommen ist. Daran ändern auch unterschiedliche Lichtverhältnisse der Umgebung beziehungsweise des Erfassungsbereichs nichts. Gegebenenfalls können für die Ähnlichkeitsanalyse optische Strukturen für die Präsenzerkennung vorgegeben werden. So könnte beispielsweise die Kontur einer Person vorgegeben werden und die Auswerteeinheit 5 überprüft beispielsweise durch Korrelation, ob in dem aktuellen Bild der Kamera 4 ein Objekt vorhanden ist, das der Kontur einer Person entspricht. Dadurch kann mithilfe der Ähnlichkeitsanalyse gegebenenfalls darauf geschlossen werden, dass sich eine Person in der Umgebung der Präsenzdetektionsvorrichtung, d.h. im Erfassungsbereich der Kamera 4 aufhält. Um den Fall der unterschiedlichen Erscheinungsformen und Posturen (Haltungen etc.) der Objekte abzudecken, müssen bei der Ähnlichkeitsanalyse dementsprechend viele Referenzbilder mit den (optische Strukturen) zur Berücksichtigung vorgegeben werden

Die Bildverarbeitung der Auswerteeinheit 5 kann in einer Weiterbildung einen lernenden Algorithmus aufweisen. Mit einem solchen lernenden Algorithmus kann die Präsenzdetektionsvorrichtung darauf trainiert werden, Personen an sich zu erkennen, Bewegungsmuster von Personen zu erkennen und verschiedene Stellungen ein und derselben Person zu erkennen. Dadurch können gezielt auch beispielsweise Personen, die sich nicht bewegen, in dem Videosignal registriert werden. Beispielweise kann so eine Person, die fernsieht, die liest oder die schläft, eindeutig erkannt bzw. identifiziert werden. Die Detektionsmethode mit angelernten Algorithmen erreicht derzeit die höchste Genauigkeit und Zuverlässigkeit.

Die Bildverarbeitung in jeglicher Ausprägung kann aber auch auf Tiere oder andere Objekte, insbesondere bestimmte Gegenstände ausgerichtet werden. So können beispielsweise auch gezielt Wildtiere oder auch Produktionsanlagen auf ihre Bestückung hin überwacht werden.

Erkennt die Auswerteeinheit 5 die Präsenz einer Person oder eines anderen Objekts, so erzeugt sie ein entsprechendes Präsenzsignal. Mit diesem Präsenzsignal kann die Kamera 4 wiederum gesteuert werden. Beispielweise wird die Kamera 4 solange aktiv gehalten, solange die Präsenz des Objekts durch die Auswerteeinheit 5 festgestellt wird. Gegebenenfalls kann auch nach Beendigung der Präsenz eine gewisse Nachlaufzeit der Kamera 4 vorgesehen sein. Nach Abschalten der Kamera 4 kann dann wieder der Bewegungsdetektor 2 beziehungsweise die Steuerungseinheit 4 aktiviert werden, sofern sie zwischenzeitlich deaktiviert wurden.

Das Präsenzsignal der Auswerteeinheit 5 kann aber auch über eine Schnittstelle aus dem Gehäuse 1 der Präsenzdetektionsvorrichtung nach außen geliefert werden. Gegebenenfalls wird auch das Aktivierungssignal der Steuerungseinheit 3 oder das Bewegungssignal der Steuerungseinheit 2 der Auswerteeinheit zugeführt, um diese bereits in dem Präsenzsignal zu berücksichtigen. Bereits mit dem ersten Erfassen der Bewegung eines Objekts durch die Bewegungsdetektionseinheit 2 kann nämlich auf eine Präsenz geschlossen werden, sodass das Präsenzsignal entsprechend auszubilden wäre.

In Figur 2 ist schematisch der Einsatz einer Präsenzdetektionsvorrichtung 10 dargestellt. Sie ist in einem Raum 11 eines nicht näher dargestellten Gebäudes installiert. An der Decke dieses Raums befindet sich eine Leuchte 12. Sobald eine Person 13 den Raum betritt, erfasst dies die Bewegungsdetektionseinheit 2 der Präsenzdetektionsvorrichtung 10. Die Person 13 ist bei dem Betreten des Raums 11 nämlich in Bewegung. Damit steht die Präsenz der Person 13 in dem Raum 11 fest und die Präsenzdetektionsvorrichtung kann ein entsprechendes Steuersignal zum Anschalten der Leuchte 12 ausgeben.

Setzt sich nun aber die Person 13 beispielsweise an einen Tisch 14 und bewegt sich dann nicht oder kaum mehr, so kann dies die Bewegungsdetektionseinheit 2 nicht mehr wahrnehmen. Dennoch ist die Person 13 in dem Raum 11 präsent. Da aber nun die Kamera 4 und die Auswerteeinheit 5 der Präsenzdetektionsvorrichtung 10 durch die Bewegungsdetektionseinheit 2 aktiviert sind, erfolgt nun eine Präsenzdetektion über die Bildverarbeitung der Auswerteeinheit 5. Beispielsweise hat die Auswerteeinheit 5 gelernt, eine Person in dem Raum 11 oder an dem Tisch 14 explizit zu erkennen. Dann registriert die Präsenzdetektionsvorrichtung 10 also die Präsenz der sitzenden Person 13 und hält dadurch weiterhin ihre Kamera 14 aktiv und liefert ferner das Präsenzsignal an die Leuchte 12 bzw. deren Steuereinrichtung, damit die Leuchte 12 weiterhin leuchtet.

Vorzugsweise bleibt die Leuchte 12 generell solange eingeschaltet, wie die Person in dem Raum 11 bzw. der überwachten Umgebung detektiert wird. Falls der Raum oder ein anderer Bereich mehrere derartige Leuchten 12 aufweist, und sich eine Person oder mehrere Personen nur in einem bestimmten Teilbereich der überwachten Umgebung aufhalten, ist es energetisch vorteilhaft, nur denjenigen Teilbereich zu beleuchten, in dem sich die Person oder die mehreren Personen befinden. Andere Teilbereiche, in denen sich keine Personen befinden, können dann nicht beleuchtet werden. Außer dem Teilbereich, in dem sich die Person bzw. die Personen befinden, können natürlich noch bestimmte vorgegebene Teilbereiche wie etwa Notausgangsbereiche, Servicebereiche und dergleichen unabhängig von der Präsenz der Personen beleuchtet werden. So können gewisse Lichtszenen, die zumindest teilweise statisch sind, dynamisch angepasst werden.

Des Weiteren kann der Fall eintreten, dass sich eine Person in dem überwachten Bereich bzw. der überwachten Umgebung bewegt. In einer solchen Situation ist es von Vorteil, den Bewegungspfad der Person vorherzusagen. Mit dem vorhergesagten Bewegungspfad kann dann eine Lichtszene gewählt werden, die hauptsächlich den vorhergesagten Bewegungspfad beleuchtet.

Falls nun eine Person in dem überwachten Bereich bzw. der Umgebung detektiert wird, ist es nicht mehr notwendig, weitere Bewegungen zu detektieren, da ja die Kamera 10 bzw. die Leuchte 12 bereits einschaltet sind. In diesem Fall ist es unter Umständen günstig, den installierten Bewegungsdetektor, z. B. den PIR-Sensor, abzuschalten, um wiederum Energie einzusparen.

In einem weiteren Szenario kann die Person 13 den überwachten Raum 11 bzw. die Umgebung verlassen. Der Wert des Präsenzsignals deutet dies an. Hier kann nun nach einem gewissen Zeitabstand (typischerweise 10 s bis 1 min) ein Abschalten des Lichts vorgesehen sein. Gleichzeitig könnte dabei der Bewegungsdetektor für die dunkle Periode reinitialisiert bzw. wieder angeschaltet werden.

Erst wenn die Person 13 den Raum 11 wieder verlässt, registriert weder die Bewegungsdetektionseinheit 2 noch die Kamera 4 bzw. die Auswerteeinheit 5 die Person 13, sodass die Kamera 4 und/oder die Auswerteeinheit 5 gegebenenfalls mit einer gewissen Zeitverzögerung abgeschaltet bzw. deaktiviert werden können. Die Bewegungsdetektionseinheit 2 und gegebenenfalls die Steuerungseinheit 3 müssen jedoch aktiv bleiben, damit das erneute Betreten des Raums durch eine Person 13 wieder registriert werden kann.

Mit der Verfügbarkeit von günstigen digitalen Kameras wird die Belegung-bzw. Präsenzdetektion durch Präsenzdetektionsvorrichtungen mit solchen Kameras auch massenmarkttauglich. Dementsprechend können sie auch für vielerlei Beleuchtungskonzepte eingesetzt werden.

Während Standardbewegungsdetektoren auch im Dunkeln zuverlässig arbeiten und zum Aktivieren von Beleuchtungen eingesetzt werden können, eignen sie sich nicht dafür, stationäre Objekte beziehungsweise Personen zu erkennen und ein zuverlässiges entsprechendes Präsenzsignal zu liefern. Im Gegensatz dazu kann ein kamerabasierter Belegung-beziehungsweise Präsenzsensor auf der Basis von Standard-CMOS-Sensortechnologie aufgrund seiner geringen Sensitivität bei schwacher Beleuchtung nur dann vernünftige Präsenzsignale liefern, wenn ausreichende Beleuchtung gewährleistet ist. Abhängig von der Beleuchtungssituation ist also gegebenenfalls eine zusätzliche Beleuchtung einzuschalten. Die Kombination eines Standardbewegungsdetektors zum initialen Aktivieren und gegebenenfalls zum Anschalten einer Beleuchtung mit einem Präsenzsensor auf der Basis von Bildverarbeitung eines Videosignals unabhängig von einer Bewegung führt also zu einem zuverlässigen Präsenzsignal auch bei stationären Situationen.

Die Einstellung der Aktivierung der Bewegungsdetektionseinheit bzw. ihrer Zeitabschaltung sollte unter Beachtung der Auswertegeschwindigkeit des kamerabasierten Präsenzerkennungssystem ausreichend lange (typischerweise 10sec) gewählt werden, um zu gewährleiten, dass das damit verbundene Videosystem mit seiner hochwertigen Signalverarbeitung in der Lage ist, die Aufgabe der Präsenzdetektion beispielsweise einer Person vollständig auszuführen.

## Patentansprüche

1. Präsenzdetektionsvorrichtung (10) zum Detektieren einer Präsenz eines Objekts (13) in ihrer Umgebung, umfassend:
- eine Bewegungsdetektionseinheit (2) zum Detektieren einer Bewegung des Objekts (13) in der Umgebung der Präsenzdetektionsvorrichtung (10), und zum Ausgeben eines Bewegungssignals in Abhängigkeit von dem Detektieren,
- eine Steuerungseinheit (3) zum Erzeugen eines Aktivierungssignals in Abhängigkeit von dem Bewegungssignal, und
- eine Kamera (4), die mit dem Aktivierungssignal aktivierbar ist, zum Gewinnen eines Videosignals von der Umgebung der Präsenzdetektionsvorrichtung (10), **gekennzeichnet durch**
- eine Auswerteeinheit (5) zum Erzeugen eines Präsenzsignals entsprechend der Präsenz des Objekts (13) in einer Phase der Bewegungslosigkeit des Objekts (13) durch Auswerten des Videosignals, wobei die Auswerteeinheit (5) das Videosignal dahingehend auswertet, ob sich das Objekt (13) in der Umgebung der Präsenzdetektionsvorrichtung (10) befindet, und wobei
- mit dem Präsenzsignal die Kamera (4) von der Steuerungseinheit (3) derart gesteuert wird, dass die Kamera (4) aktivgehalten wird, mindestens solange die Präsenz des Objekts (13) durch die Auswerteeinheit (5) festgestellt ist.

2. Präsenzdetektionsvorrichtung (10) nach Anspruch 1, wobei die Auswerteeinheit (5) dazu ausgebildet ist, bei dem Auswerten des Videosignals eine Subtraktion zwischen einem Bild des Videosignals und einem vorgegebenen Bild der Umgebung der Präsenzdetektionsvorrichtung (10) ohne das Objekt (13) durchzuführen.

3. Präsenzdetektionsvorrichtung (10) nach Anspruch 1, wobei die Auswerteeinheit (5) dazu ausgebildet ist, bei dem Auswerten des Videosignals eine Ähnlichkeitsanalyse zwischen einem Bild des Videosignals und einem vorgegebenen Abbild des Objekts (13) durchzuführen und bei Erreichen eines vorgegebenen Schwellwerts das entsprechende Präsenzsignal auszugeben.

4. Präsenzdetektionsvorrichtung (10) nach Anspruch 1, wobei die Auswerteeinheit (5) dazu ausgebildet ist, eine oder mehrere Eigenschaften in Bilddaten des Objekts (13) zu erlernen, um selbständig die Präsenz des Objekts (13) anhand der erlernten Eigenschaft bzw. Eigenschaften in dem Videosignal zu erkennen und das Präsenzsignal entsprechend auszugeben.

5. Präsenzdetektionsvorrichtung (10) nach einem der vorhergehenden Ansprüche, wobei die Bewegungsdetektionseinheit (2) einen Infrarotsensor aufweist, mit dem auf der Basis von Infrarotstrahlung eine Bewegung des Objekts (13) detektierbar ist.

6. Präsenzdetektionsvorrichtung (10) nach einem der vorhergehenden Ansprüche, wobei das Objekt (13) eine Person oder ein Tier ist.

7. Präsenzdetektionsvorrichtung (10) nach einem der vorhergehenden Ansprüche, die eine Beleuchtungseinheit (12) aufweist, welche mit dem Aktivierungssignal aktivierbar ist.

8. Präsenzdetektionsvorrichtung (10) nach Anspruch 7, wobei die Beleuchtungseinheit (12) solange angeschaltet bleibt, solange sich das Objekt (13) entsprechend dem Präsenzsignal in der Umgebung befindet.

9. Präsenzdetektionsvorrichtung (10) nach einem der vorhergehenden Ansprüche, wobei die Kamera (4) einen Videosensor aufweist, welcher im Spektralbereich des sichtbaren Tageslichts und auch im nahen Infrarotbereich empfindlich ist.

10. Präsenzdetektionsvorrichtung (10) nach einem der vorhergehenden Ansprüche, wobei die Steuerungseinheit (3) dazu ausgebildet ist, die Präsenzdetektionsvorrichtung (10) im Anschluss an eine Aktivierung der Kamera (4) mindestens eine vorgegebenen Zeitdauer durchgehend aktiviert zu halten.

11. Präsenzdetektionsvorrichtung (10) nach Anspruch 7, wobei das Objekt (13) eine oder mehrere Personen sind, welche von der Bewegungsdetektionseinheit (2) in einem Bereich der Umgebung detektiert werden, wobei die Beleuchtungseinheit (12) mittels der Steuerungseinheit (3) zum Erzeugen einer Beleuchtungsszene in Abhängigkeit von dem Bereich steuerbar ist, insbesondere so, dass in der Umgebung nur der Bereich beleuchtet wird.

12. Präsenzdetektionsvorrichtung (10) nach Anspruch 7, wobei das Objekt (13) eine Person ist, welche in der Umgebung von der Bewegungsdetektionseinheit (2) detektiert wird, mit der Bewegungsdetektionseinheit (2) ein Bewegungspfad der Person in der Umgebung vorhersagbar ist, und die Steuerungseinheit (3) ausgebildet ist, die Beleuchtungseinheit (12) in Abhängigkeit von dem Bewegungspfad anzusteuern, insbesondere derart, dass nur oder wenigstens der vorhergesagte Bewegungspfad oder ein Teil davon beleuchtet wird.

13. Präsenzdetektionsvorrichtung (10) nach einem der vorhergehenden Ansprüche, wobei mit der Steuerungseinheit (3) die Bewegungsdetektionseinheit (2) abschaltbar ist, sobald entsprechend dem Präsenzsignal das Objekt (13) in der Umgebung detektiert ist.

14. Präsenzdetektionsvorrichtung (10) nach Anspruch 7, wobei die Beleuchtungseinheit (12) von der Steuerungseinheit nach einer vorbestimmten Zeitdauer abhängig von demjenigen Zeitpunkt abschaltbar ist, zu dem das Objekt (13) entsprechend dem Präsenzsignal die Umgebung verlässt.

15. Verfahren zum Detektieren einer Präsenz eines Objekts (13) in einem vorgegebenen Bereich, mit den Schritten:
- Detektieren einer Bewegung des Objekts (13) in dem vorgegebenen Bereich,
- Erzeugen eines Bewegungssignals in Abhängigkeit von dem Detektieren,
- Erzeugen eines Aktivierungssignals in Abhängigkeit von dem Bewegungssignal,
- Gewinnen eines Videosignals von dem vorgegebenen Bereich ausgelöst durch das Aktivierungssignal, **gekennzeichnet durch**
- Erzeugen eines Präsenzsignals betreffend die Präsenz des Objekts (13) in einer Phase der Bewegungslosigkeit des Objekts (13) in dem vorgegebenen Bereich durch Auswerten des Videosignals dahingehend, ob sich das Objekt (13) in der Umgebung der Präsenzdetektionsvorrichtung (10) befindet, wobei
- mit dem Präsenzsignal die Kamera (4) derart gesteuert wird, dass die Kamera (4) aktivgehalten wird, mindestens solange die Präsenz des Objekts (13) durch die Auswerteeinheit (5) festgestellt ist.

## Claims

1. A presence detection device (10) for detecting a presence of an object (13) in its environment, comprising:
- a movement detection unit (2) for detecting a movement of the object (13) in the environment of the presence detection device (10) and for outputting a movement signal depending on the detection,
- a control unit (3) for generating an activation signal depending on the movement signal, and
- a camera (4), which can be activated by the activation signal, for obtaining a video signal of the environment of the presence detection device (10), **characterized by**
- an evaluation unit (5) for generating a presence signal corresponding to the presence of the object (13) in a phase of the immobility of the object (13) by evaluating the video signal, wherein the evaluation unit (5) evaluates the video signal to the effect if the object (13) is in the environment of the presence detection device (10), and wherein
- the camera (4) is controlled by the control unit (3) with the presence signal such that the camera (4) is kept active at least as long as the presence of the object (13) is determined by the evaluation unit (5).

2. The presence detection device (10) according to claim 1, wherein the evaluation unit (5) is formed to perform a subtraction between an image of the video signal and a preset image of the environment of the presence detection device (10) without the object (13) in evaluating the video signal.

3. The presence detection device (10) according to claim 1, wherein the evaluation unit (5) is formed to perform a similarity analysis between an image of the video signal and a preset picture of the object (13) in evaluating the video signal and to output the corresponding presence signal upon reaching a preset threshold value.

4. The presence detection device (10) according to claim 1, wherein the evaluation unit (5) is formed to learn one or more characteristics in image data of the object (13) to autonomously recognize the presence of the object (13) based on the learned characteristic or characteristics in the video signal and to correspondingly output the presence signal.

5. The presence detection device (10) according to any one of the preceding claims, wherein the movement detection unit (2) comprises an infrared sensor, by which a movement of the object (13) is detectable based on infrared radiation.

6. The presence detection device (10) according to any one of the preceding claims, wherein the object (13) is a person or an animal.

7. The presence detection device (10) according to any one of the preceding claims, which comprises a lighting unit (12), which can be activated by the activation signal.

8. The presence detection device (10) according to claim 7, wherein the lighting unit (12) remains turned on as long as the object (13) is located in the environment according to the presence signal.

9. The presence detection device (10) according to any one of the preceding claims, wherein the camera (4) comprises a video sensor, which is sensitive in the spectral range of the visible daylight and also in the near infrared range.

10. The presence detection device (10) according to any one of the preceding claims, wherein the control unit (3) is formed to continuously keep the presence detection device (10) activated subsequent to an activation of the camera (4) at least for a preset period of time.

11. The presence detection device (10) according to claim 7, wherein the object (13) is one or more persons, who are detected in an area of the environment by the movement detection unit (2), wherein the lighting unit (12) is controllable by means of the control unit (3) for generating a lighting scene depending on the area, in particular such that only the area is lighted in the environment.

12. The presence detection device (10) according to claim 7, wherein the object (13) is a person, who is detected in the environment by the movement detection unit (2), a movement path of the person in the environment is predictable by the movement detection unit (2), and the control unit (3) is formed to control the lighting unit (12) depending on the movement path, in particular such that only or at least the predicted movement path or a part thereof is lighted.

13. The presence detection device (10) according to any one of the preceding claims, wherein the movement detection unit (2) can be turned off by the control unit (3) as soon as the object (13) is detected in the environment according to the presence signal.

14. The presence detection device (10) according to claim 7, wherein the lighting unit (12) can be turned off by the control unit after a predetermined period of time depending on that point of time, at which the object (13) leaves the environment according to the presence signal.

15. A method for detecting a presence of an object (13) in a preset area, comprising the steps of:
- detecting a movement of the object (13) in the preset area,
- generating a movement signal depending on the detection,
- generating an activation signal depending on the movement signal,
- obtaining a video signal of the preset area triggered by the activation signal, **characterized by**
- generating a presence signal relating to the presence of the object (13) in a phase of the immobility of the object (13) in the preset area by evaluating the video signal to the effect if the object (13) is located in the environment of the presence detection device (10), wherein
- the camera (4) is controlled by the presence signal such that the camera (4) is kept active at least as long as the presence of the object (13) is determined by the evaluation unit (5).

## Revendications

1. Dispositif de détection de présence (10) destiné à détecter la présence d'un objet (13) dans son environnement, ledit dispositif comprenant :
- une unité de détection de mouvement (2) destinée à détecter un mouvement de l'objet (13) dans l'environnement du dispositif de détection de présence (10) et à délivrer un signal de mouvement en fonction de la détection,
- une unité de commande (3) destinée à générer un signal d'activation en fonction du signal de mouvement, et
- une caméra (4) qui peut être activée avec le signal d'activation pour obtenir un signal vidéo de l'environnement du dispositif de détection de présence (10), **caractérisé par**
- une unité d'évaluation (5) destinée à générer un signal de présence correspondant à la présence de l'objet (13) dans une phase d'immobilité de l'objet (13) en évaluant le signal vidéo, l'unité d'évaluation (5) évaluant le signal vidéo pour déterminer si l'objet (13) se trouve dans l'environnement du dispositif de détection de présence (10), et
- la caméra (4) étant commandée par l'unité de commande (3) avec le signal de présence de manière à ce que la caméra (4) soit maintenue active au moins aussi longtemps que la présence de l'objet (13) est détectée par l'unité d'évaluation (5).

2. Dispositif de détection de présence (10) selon la revendication 1, l'unité d'évaluation (5) étant conçue pour effectuer une soustraction entre une image du signal vidéo et une image spécifiée de l'environnement du dispositif de détection de présence (10) sans l'objet (13) lors de l'évaluation du signal vidéo.

3. Dispositif de détection de présence (10) selon la revendication 1, l'unité d'évaluation (5) étant conçue pour effectuer une analyse de similarité entre une image du signal vidéo et une reproduction spécifiée de l'objet (13) lors de l'évaluation du signal vidéo et pour délivrer le signal de présence correspondant lorsqu'une valeur de seuil spécifiée est atteinte.

4. Dispositif de détection de présence (10) selon la revendication 1, l'unité d'évaluation (5) étant conçue pour apprendre une ou plusieurs propriétés dans des données d'image de l'objet (13) afin de reconnaître indépendamment la présence de l'objet (13) sur la base de la propriété ou des propriétés apprises dans le signal vidéo et de délivrer en conséquence le signal de présence.

5. Dispositif de détection de présence (10) selon l'une des revendications précédentes, l'unité de détection de mouvement (2) comportant un capteur infrarouge à l'aide duquel un mouvement de l'objet (13) peut être détecté sur la base d'un rayonnement infrarouge.

6. Dispositif de détection de présence (10) selon l'une des revendications précédentes, l'objet (13) étant une personne ou un animal.

7. Dispositif de détection de présence (10) selon l'une des revendications précédentes, qui comporte une unité d'éclairage (12) qui peut être activée avec le signal d'activation.

8. Dispositif de détection de présence (10) selon la revendication 7, l'unité d'éclairage (12) restant allumée aussi longtemps que l'objet (13) se trouve dans l'environnement conformément au signal de présence.

9. Dispositif de détection de présence (10) selon l'une des revendications précédentes, la caméra (4) comportant un capteur vidéo qui est sensible dans le domaine spectral de la lumière du jour visible et également dans le domaine de l'infrarouge proche.

10. Dispositif de détection de présence (10) selon l'une des revendications précédentes, l'unité de commande (3) étant conçue pour maintenir le dispositif de détection de présence (10) activé en continu pendant au moins un intervalle de temps spécifié après l'activation de la caméra (4).

11. Dispositif de détection de présence (10) selon la revendication 7, l'objet (13) étant une ou plusieurs personnes qui sont détectées par l'unité de détection de mouvement (2) dans une zone de l'environnement, l'unité d'éclairage (12) pouvant être commandée à l'aide de l'unité de commande (3) pour générer une scène d'éclairage en fonction de la zone, en particulier de sorte que dans l'environnement seule la zone soit éclairée.

12. Dispositif de détection de présence (10) selon la revendication 7, l'objet (13) étant une personne qui est détectée dans l'environnement par l'unité de détection de mouvement (2), un trajet de mouvement de la personne dans l'environnement pouvant être prédit à l'aide de l'unité de détection de mouvement (2) et l'unité de commande (3) étant conçue pour commander l'unité d'éclairage (12) en fonction du trajet de mouvement, en particulier de manière à ce que seul ou au moins le trajet de mouvement prédit ou une partie de celui-ci soit éclairé(e) .

13. Dispositif de détection de présence (10) selon l'une des revendications précédentes, l'unité de détection de mouvement (2) pouvant être désactivée avec l'unité de commande (3) dès que l'objet (13) est détecté dans l'environnement conformément au signal de présence.

14. Dispositif de détection de présence (10) selon la revendication 7, l'unité d'éclairage (12) pouvant être désactivée par l'unité de commande après un intervalle de temps prédéterminé en fonction de l'instant auquel l'objet (13) quitte l'environnement conformément au signal de présence.

15. Procédé de détection de présence d'un objet (13) dans une zone spécifiée, ledit procédé comprenant les étapes suivantes :
- détecter un mouvement de l'objet (13) dans la zone spécifiée,
- générer un signal de mouvement en fonction de la détection,
- générer un signal d'activation en fonction du signal de mouvement,
- obtenir un signal vidéo de la zone spécifiée par déclenchement à l'aide du signal d'activation, **caractérisé par** :
- la génération d'un signal de présence relatif à la présence de l'objet (13) dans une phase d'immobilité de l'objet (13) dans la zone spécifiée en évaluant le signal vidéo pour déterminer si l'objet (13) se trouve dans l'environnement du dispositif de détection de présence (10),
- la caméra (4) étant commandée avec le signal de présence de manière à ce que la caméra (4) soit maintenue active au moins aussi longtemps que la présence de l'objet (13) est détectée par l'unité d'évaluation (5).
